# EUROPEAN PATENT SPECIFICATION

(11) **EP 1 747 144 B1**
(45) Date of publication and mention of the grant of the patent: **06.05.2009**
(21) Application number: 04732383.7
(22) Date of filing: 12.05.2004
(51) Int. Cl.: B64F 5/00

(54) **SPRAY-REGULATING SYSTEM INCORPORATED IN AIRCRAFT ANTI-ICERS**
IN FLUGZEUG-ENTEISUNGSVORRICHTUNGEN EINGEBAUTES SPRAY-REGULIERSYSTEM
SYSTÈME DE RÉGULATION DE PULVÉRISATION INCORPORÉE DANS DES DISPOSITIFS ANTI-GIVRE D'AÉRONEFS

(43) Date of publication of application: 31.01.2007
(73) Proprietor: VESTERGAARD COMPANY A/S, 4000 Roskilde (DK)
(72) Inventor: SVANEBJERG, Elo, DK-4733 Tappernøje (DK)
(74) Representative: Tonnesen, Bo
(86) International application number: PCT/IB2004/050657
(87) International publication number: WO 2005/110846

(56) References cited:
- US-A- 3 243 123
- US-A- 4 848 657
- US-A- 4 986 497
- US-A- 5 318 254
- US-A- 5 711 483

## Description

### FIELD OF THE INVENTION

The present invention relates to de-icing and anti-icing procedures performed on airplanes on the ground, wherein a fluid is sprayed from the boom or arm of a deicer installation onto the aircraft in order to remove or prevent frozen contaminations on the surface. Hereafter the expression de-icing means to remove snow and ice from the aircraft surface, the de-icing being performed by applying a heated low-viscosity fluid. The expression anti-icing is a treatment normally performed after de-icing; the fluid used for anti-icing is a thickened fluid with a higher viscosity. The purpose of the thickened anti-icing fluid is to adhere to the aircraft surface until the aircraft is airborne, to protect the aircraft against precipitation freezing on the surface.

### BACKGROUND OP THE INVENTION

Such de-icing/anti-icing equipment is widely known from e.g. the patent literature wherein US 3,243,123 is believed to be the closest prior art. Said document discusses a spraying apparatus for cleaning or removing ice and snow from aircraft. However, a major difficulty when using anti-icing treatment is to avoid the fluid flowing too fast through the spray nozzle resulting in shearing damages due to the sensitive nature of the fluid. Dealing with de-icing equipment, said document does not mention and does not hint to solutions on how to avoid shearing damages in de-icing fluids as it is not an issue.

Also US Patent 4.565,321 "Vehicle for de-icing aircraft" belonging to the assignee of the present application, represents relevant prior art.

The basic layout of the equipment comprises e.g. a vehicle frame or truck and a lever or boom extending from the vehicle and carrying an operator's platform from where the spraying onto an aircraft is provided.

In this technical field it is known to regulate the flow of liquid by regulating the pump motor and EP 0 876 842 B1 "Mixing apparatus for spraying a liquid mixture" also in the name of the present assignee describes the use of two tanks containing liquids to be mixed before spraying, wherein a motor-regulating system is provided for maintaining a required mixing ratio.

In general, such equipment will comprise a number of spraying components including tanks with de-icing and anti-icing fluid, fluid pumps with drive motors, and hoses or pipelines between the pumps and the spray nozzle to pump the fluid from the tank to the spray nozzle at the platform.

In prior art equipment it is common standard to maintain a constant flow rate when anti-icing fluid is sprayed, in order to achieve a constant pressure drop from the fluid pump to the fully opened nozzle. However, this results in too much fluid being used, because the flow from the nozzle cannot be adjusted according to the actual needs.

For anti-icing purposes the fluid will have added thickeners in order to hold a certain fluid-layer thickness on the aircraft surface for an extended period (holdover time) after application. The resulting increased viscosity makes the fluid sensitive to shearing damages, when higher pressure drops over the nozzle occur because the fluid will be accelerated very much and the molecular structure would be stretched beyond cohesion limits.

The occurrence of lower pressure drops over the nozzle would mean too short spray distance of the fluid jet to obtain a satisfactory distribution of fluid on the surface of the aircraft.

### SUMMARY OF THE INVENTION

As opposed to the constant flow scenario the inventor has pursued establishing a constant pressure drop over the nozzle even if the flow rate through the pipeline is variable. Thereby it is possible to progressively match the pump pressure required to compensate for the differences in height of the nozzle relative to the pump and for the pressure drop deprived from the variable flow in the pipeline.

According to the invention an aircraft anti-icer incorporating a pressure-regulating system is provided, which secures a constant pressure upstream of the nozzle and thereby a constant pressure drop over the spray nozzle irrespective of the height of the operator's platform relative to the pump, and of the pressure drop in the pipeline.

The pressure-regulating system comprises a pressure sensor mounted in close proximity to the nozzle in such a way that the nozzle inlet pressure is measured and transmitting its measured data to a central control unit, which further instructs a regulator device to adjust the momentum of the fluid pump drive motor and thereby varying the flow rate and/or pressure rate in the pipeline.

According to the invention it is possible to maintain a constant pressure on the upstream side of the nozzle and thereby a constant pressure drop over the nozzle with a variable fluid flow through the nozzle. The constant pressure will optimize the spray pattern without damaging the fluid. With a variable flow it is possible to adjust the amount of fluid sprayed to the amount needed for covering the surface of the aircraft.

According to a further embodiment of the invention the central control unit comprises a signal receiver and a signal transmitter and a computer to continuously calculate the proper motor-regulating signal based on the input data from the pressure sensor.

Moreover, the anti-icer according to the invention is further comprising a tank for water, and means for mixing the anti-icing fluid and water before it is pumped into the pipeline by means of the momentum-regulated drive motor driving one or more pumps for delivery of fluid into the pipeline.

Yet another embodiment of the invention comprises further sensors to measure parameters, e.g. the viscosity of the fluid based on mixture ratio and temperature, wherein such further parameter data are processed by the control unit together with the pressure signal, and the resulting signal is sent to the regulating device

The anti-icer according to the invention can also be used for spraying equipment comprising several tanks and pumps working in parallel.

Finally, In one application a vehicle and an elevating boom, arm or platform is provided with an anti-icer according to the invention.

### BRIEF DESCRIPTION OF THE DRAWINGS

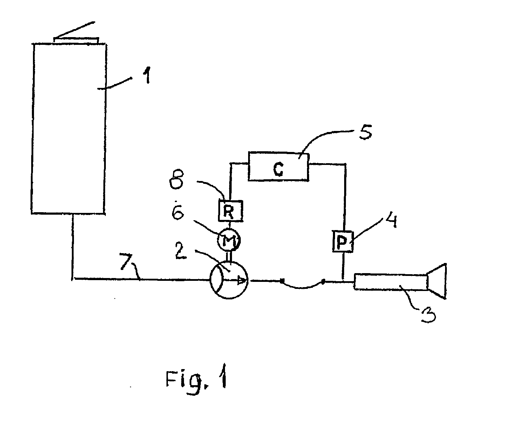

Figure 1 is a diagram showing the spray-regulating system of the invention.

### DETAILED DESCRIPTION OF THE PREFERRED EMBODIMENTS

Referring to Figure 1 an aircraft anti-icer according to the invention is illustrated. The anti-icer comprises a tank 1 containing anti-icing fluid and being connected to a fluid-diaphragm pump 2 driven by a motor 6. From said pump 2 anti-icing fluid is pumped through a hose or pipeline 7 to the spray nozzle 3 so that it is sprayed onto the surfaces of an aircraft and protects them from building up frozen contamination on the surface.

In close proximity to the inlet of the spray nozzle 3, a pressure sensor 4 is mounted in such a way that the nozzle inlet pressure is measured and reported to a central control unit 5. Said control unit 5 receives the pressure signal from the sensor 4 and based on the possible difference between the actual pressure and the required pressure a signal is produced and transmitted to a regulating device 8, which will then adjust the speed of the pump motor 6 and thereby influence the fluid flow rate in the pipeline 7.

In this way it is possible to adjust for pressure drops in the hose or pipeline 7 when the flow rate is variable and for the pressure loss in accordance with the height of the spray nozzle relative to the height of the pump, which ensures a constant pressure upstream of the nozzle and thereby a constant pressure drop over the nozzle, so that the spray pattern is optimized without damage to the thickened anti-icing fluid.

Obviously, the control parameters being used to calculate the signal transmitted by the central control unit 5 can take into account measures of not only the pressure but also the viscosity of the fluid in dependence on the mixture ratio and temperature.

## Claims

1. Aircraft anti-icer comprising a tank (1) with anti-icing fluid, a fluid pump (2) with a drive motor (6), and a hose or pipeline (7) between the pump (2) and a spray nozzle (3) located on an elevating boom, arm or operator's platform so that the fluid can be pumped from the tank (1) to the spray nozzle (3), **characterized in** further comprising a spray-regulating system comprising a central control unit (5), a pressure-signal-generating pressure sensor (4) located proximate to the inlet of the nozzle (3) in such a way that the nozzle inlet pressure is measured, and a regulating device (8) for the motor (6) to adjust the motor momentum, wherein a constant pressure upstream of the nozzle (3) and consequently over said nozzle (3) is maintained by said control unit (5) producing a signal calculated on a pressure signal received from the sensor (4) and the pressure required upstream of the nozzle (3), and said signal being transmitted to the regulating device (8), which then adjusts the momentum of the pump motor (6) and thereby adjusts the flow rate and or pressure rate in the pipeline (7).

2. Aircraft anti-icer according to claim 1, **characterized in** the central control unit (5) being comprised of a signal receiver and a signal transmitter and a computer to continuously calculate the proper motor-regulating signal based on the input from the pressure sensor (4).

3. Aircraft anti-icer according to claim 1 or 2, **characterized in** further comprising a tank for water, and means for mixing the anti-icing fluid and water before it is pumped into the pipeline (7) by means of the momentum-regulated drive motor (4) driving one or more pumps (2) for delivery of fluid into the pipeline (7).

4. Aircraft anti-icer according to any of the claims 1-3, **characterized in** comprising further sensors to measure further parameters, e.g. the viscosity of the fluid based on mixture ratio and temperature, wherein said further parameters are processed by the control unit (5) together with the pressure signal, and the resulting signal is sent to the regulating device (8).

## Patentansprüche

1. Flugzeug-Enteisungsvorrichtung, umfassend einen Tank (1) mit Enteisungsflüssigkeit, eine Flüssigkeitspumpe (2) mit einem Antriebsmotor (6), und einen Schlauch oder eine Rohrleitung (7) zwischen der Pumpe (2) und einer Spritzdüse (3), welche auf einem Hebeausleger, einem Kranarm oder einer Bedienungsbühne derart angeordnet ist, dass die Flüssigkeit vom Tank (1) zur Spritzdüse (3) gepumpt werden kann, **dadurch gekennzeichnet, dass** sie ferner ein Sprayregulier-System umfasst, umfassend eine zentrale Steuereinheit (5), einen ein Druck-Signal erzeugenden Drucksensor (4), welcher in unmittelbarer Nähe des Eingangs der Düse auf eine solche Weise angeordnet ist, dass der Düseneingangsdruck gemessen wird, und eine Reguliereinrichtung (8) für den Motor (6) zum Regeln des Motorkraftmoments, wobei ein konstanter Druck stromaufwärts der Düse (3) und infolgedessen über der Düse (3) durch die Steuereinheit (5) aufrechterhalten wird, welche ein Signal erzeugt, das auf ein vom Sensor (4) empfangenes Drucksignal und den stromaufwärts der Düse (3) geforderten Druck berechnet wird, und wobei das Signal an die Reguliereinrichtung (8) übermittelt wird, die dann das Kraftmoment des Pumpenmotors (6) regelt und **dadurch** den Massendurchsatz und/oder Druck in der Rohrleitung (7) regelt.

2. Flugzeug-Enteisungsvorrichtung nach Patentanspruch 1, **dadurch gekennzeichnet, dass** die zentrale Steuereinheit (5) aus einem Signalempfänger und einem Signalgeber und einem Computer zum fortlaufenden Berechnen des exakten Motorreguliersignals besteht, welches auf der Eingabe vom Drucksensor (4) basiert.

3. Flugzeug-Enteisungsvorrichtung nach Patentanspruch 1 oder 2, **dadurch gekennzeichnet, dass** sie ferner einen Tank für Wasser und Mittel zum Mischen der Enteisungsflüssigkeit und des Wassers umfasst, bevor sie mittels des kraftmomentgeregelten Antriebsmotors (4) in die Rohrleitung (7) gepumpt werden, welcher eine oder weitere Pumpen (2) zum Fördern von Flüssigkeit in die Rohrleitung (7) antreibt.

4. Flugzeug-Enteisungsvorrichtung nach einem der Patentansprüche 1 bis 3, **dadurch gekennzeichnet, dass** sie weitere Sensoren zum Bemessen weiterer Parameter umfasst, z.B. der Viskosität der Flüssigkeit basiert auf Mischungsverhältnis und Temperatur, wobei die weiteren Parameter von der Steuereinheit (5) zusammen mit dem Drucksignal bearbeitet werden, und das resultierende Signal an die Reguliereinrichtung (8) gesandt wird.

## Revendications

1. Dispositif d'anti-givre d'aéronef comprenant un réservoir (1) avec du fluide d'anti-givrage, une pompe pour fluide (2) avec un moteur d'entraînement (8) et un tuyau flexible ou un conduit (7) entre la pompe (2) et un bec pulvérisateur (3) localisé sur un palan à bras, un bras ou une plate-forme de conduite, de manière à ce que le fluide peut être pompé du réservoir (1) au bec pulvérisateur (3) **caractérisé en ce qu'**il comprend en outre un système de régulation de pulvérisation comprenant une unité de commande centrale (5), un capteur de pression pour la génération de signal de pression (4) localisé à proximité de l'admission du bec (3) de telle manière que la pression de l'admission du bec est mesurée, et un dispositif de régulation (8) pour le moteur (6) pour ajuster le moment moteur où une pression constante en amont du bec (3), et par conséquent au-dessus ledit bec (3), est maintenue par ladite unité de commande (5) en produisant un signal calculée sur un signal de pression reçu par le capteur (4) et la pression nécessaire en amont du bec (3), et ledit signal étant transmis au dispositif de régulation (8) qui alors ajuste le moment de la motopompe (6) et par conséquent ajuste le flux et/ou le débit de la pression dans le conduit (7).

2. Dispositif d'anti-givre d'aéronef selon la revendication 1, **caractérisé en ce que** l'unité de commande centrale (5) étant comprise par un récepteur de signaux et un émetteur de signaux et un ordinateur pour calculer continuellement le signal correct de regulation par le moteur basé sur l'apport du capteur de pression (4).

3. Dispositif d'anti-givre d'aéronef selon la revendication 1 ou 2, **caractérisé en ce qu'**il comprend en outre un réservoir d'eau et des moyens pour mélanger le fluide anti givrage et l'eau avant de le pomper dans le conduit (7) par moyens du moteur d'entraînement de regulation moment (4) qui entraîne au moins une pompe (2) pour la délivrance de fluide dans le conduit (7).

4. Dispositif d'anti-givre d'aéronef selon l'une quelconque des revendications 1 à 3, **caractérisé en ce qu'**il comprend des capteurs supplémentaires pour mesurer des paramètres supplémentaires, par exemple la viscosité du fluide basée sur le rapport de mélange la et température, où lesdits paramètres supplémentaires sont procédés par l'unité de commande (5) avec le signal de pression, et le signal qui en résulte est envoyé au dispositif de régulation (8).
